# EUROPEAN PATENT SPECIFICATION

(11) **EP 0 713 468 B1**
(45) Date of publication and mention of the grant of the patent: **03.02.1999**
(21) Application number: 94927197.7
(22) Date of filing: 18.08.1994
(51) Int. Cl.: B65B 61/18, B65B 55/02, B65B 9/08

(54) **METHOD AND APPARATUS FOR MAKING AND FILLING A POUCH WITH A FITMENT**
VERFAHREN UND VORRICHTUNG ZUM HERSTELLEN UND FÜLLEN EINES BEUTELS MIT EINEM MUNDSTÜCK
PROCEDE ET APPAREIL DE FABRICATION ET DE REMPLISSAGE D'UNE POCHE A CLOISON

(30) Priority: 18.08.1993 US 108853
(43) Date of publication of application: 29.05.1996
(73) Proprietor: INPACO CORPORATION, Nazareth, Pennsylvania 18064 (US)
(72) Inventor: CHRISTINE, William, C., Nazareth, PA 18064 (US); PRITCHARD, Barry, L., Nazareth, PA 18064 (US)
(74) Representative: Altenburg, Udo, Dipl.-Phys.
(86) International application number: US9409420
(87) International publication number: WO9505317

(56) References cited:
- EP-A- 0 372 688
- WO-A-86/06344
- FR-A- 2 074 068
- US-A- 4 598 529

## Description

### Field of the Invention

This invention relates to a method and apparatus for making a pouch with a fitment and more precisely a pouch formed in a sterilized chamber and then filled and sealed in a sterilized chamber that contains only the upper portion of the pouch.

### Background of the Invention

Flexible pouches for storage and dispersement of both fluids and solids, such as foods and medicines are common. The pouches are typically made of a thermoplastic or other heat sealable film or foil. These pouches are typically formed by applying heat and pressure to the thermoplastic to seal portions together.

The size, shape and forming materials of a pouch influence the procedures required to form, fill and seal the pouch. For example, certain products can be stored longer in a low oxygen atmosphere. Domke et. al. U.S. Pat. No. 3,871,157 discloses an apparatus for filling and closing packaging containers in a low oxygen environment. Other products must be maintained in a sterile environment. Dunn et. al. U.S. Pat. No. 4,910,942 discloses an apparatus for forming, filling and sealing a pouch which utilizes a high intensity incoherent light pulse to sterilize the film.

The choice in direction that the thermoplastic web or pouch moves during forming, filling and sealing, for example vertically or horizontally, typically depends on the dimensions of the pouch and the materials to be placed in the pouch. Benner, Jr. et al. U.S. Pat. No. 3,667,188 discloses a method and apparatus for forming pouches horizontally wherein the thermoplastic is folded and the fold defines a bottom edge of the pouch.

In addition, the installation of components on the pouch, such as fitments or couplers to be used for dispersement of the materials from the pouch, may also influence which direction the web and the pouch move. Certain pouches require the fitment or coupler to be maintained in a sterile environment until required for dispersement of the material in the pouch. Pouches for medical products such as intravenous solutions or blood commonly have such fitments. In addition medical pouches require that the reservoir area be maintained sterile during filling and sealing.

WO-A-86 06344 discloses a method for attaching a fitment to the fold of a pouch as a pouch is being formed in a horizontal form/fill/seal machine, including the steps of at least partially separating the pouches from each other to releave the stretching tension and then opening the pouch and reshaping the bottom thereof to accommodate a fitment which is then attached thereto. The preamble of claims 1 and 9 is based on this prior art.

### Summary of the Invention

A preferred embodiment of the present invention provides a method and apparatus for forming, filling and sealing a pouch having a fitment wherein a sterilized chamber is created and maintained around the forming, filling, and sealing processes. A film web passes from a sterilized bath into the chamber. A drive moves the film web through the chamber where several steps occur to form the pouch. The web is folded in half therein defining an upper edge at the fold. The selvage edges are positioned below the folded edge and in close proximity to each other. After folding, the web defines a pair of parallel walls. A pocket is formed in each of the walls of the film in alignment with each other and in proximity to the selvage edge. The pocket is preferably formed by stretching the film web. A fitment is inserted between the two pockets and the walls are sealed together to retain the fitment. The two walls are sealed together forming a pouch having a reservoir portion which communicates with the fitment. A "U" shaped peelable seal is formed between the two walls below and around the fitment. The formed pouch is then cut from the film web. The formed pouch with the folded upper edge is moved into a partial chamber that is sterilized and surrounds the upper portion of the pouch. The partial chamber is connected to the sterilized forming chamber. The lower portion of the pouch depends below the partial chamber. The pouch is moved through the partial chamber by a mechanism located below the chamber. Within the chamber, the upper edge of the pouch is slit and the pouch is filled. Thereafter, the pouch is sealed at the upper edge.

### Brief Description of the Drawings

For the purpose of illustrating the invention, there is shown in the drawings a form which is presently preferred; it being understood, however, that this invention is not limited to the precise arrangements and instrumentalities shown.
Figure 1 is a perspective view of a finished pouch with a fitment;
Figures 2A and 2B are top sectional views of a pouch forming, filling and sealing apparatus in accordance with the present invention;
Figures 3A and 3B are side sectional views of the apparatus;
Figure 4 shows a cross-sectional view of a web stretching station for the apparatus as taken along line 4-4 in Figure 3A;
Figure 5 shows a second embodiment of a web stretching station;
Figure 6 shows a cross sectional view of a fitment insertion and securing station for the apparatus as taken along line 6-6 in Figure 3A;
Figure 7 shows a cross sectional view of a gusset forming station for the apparatus as taken along line 7-7 in Figure 3B;
Figure 8 shows a cross sectional view of a fitment sealing station for the apparatus as taken along line 8-8 in Figure 3B;
Figure 9 shows an enlarged view of a slitting station for the upper edge of the pouch as identified in Figure 3B;
Figure 10 shows a cross sectional view of a top sealing station for the apparatus as taken along line 10-10 of Figure 3B;
Figure 11 shows a top view of a chain drive for the apparatus and shows a trailing edge clamp being open;
Figure 12 shows a view of the chain drive for the apparatus with the trailing edge clamp being closed;
Figure 13 shows a top view of the chain drive for the apparatus with the trailing edge clamp moving towards the leading edge clamp to separate the two walls of the pouch; and
Figure 14 shows a side view of the pouch retained by the leading and trailing edge clamps.

### Detailed Description of the Drawings

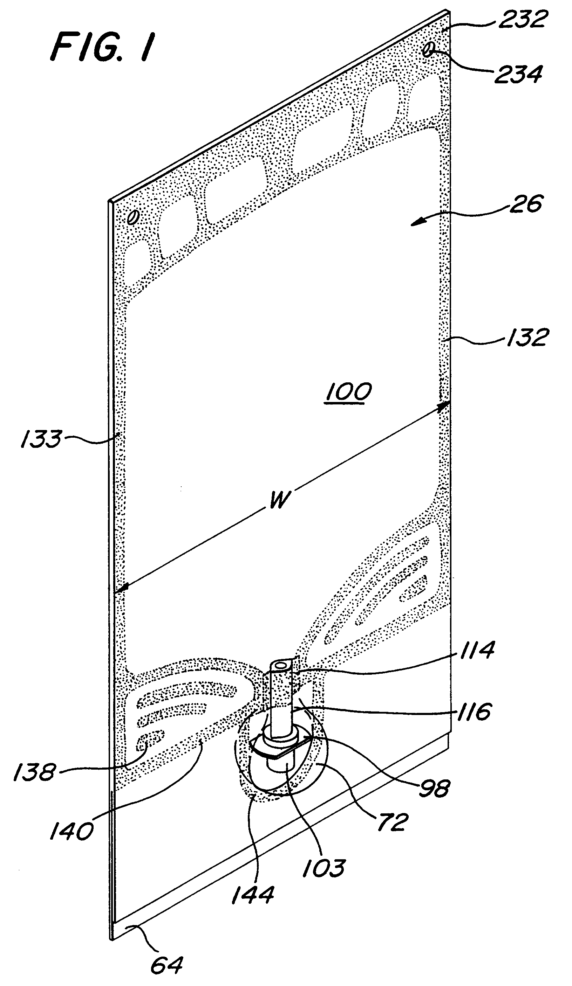

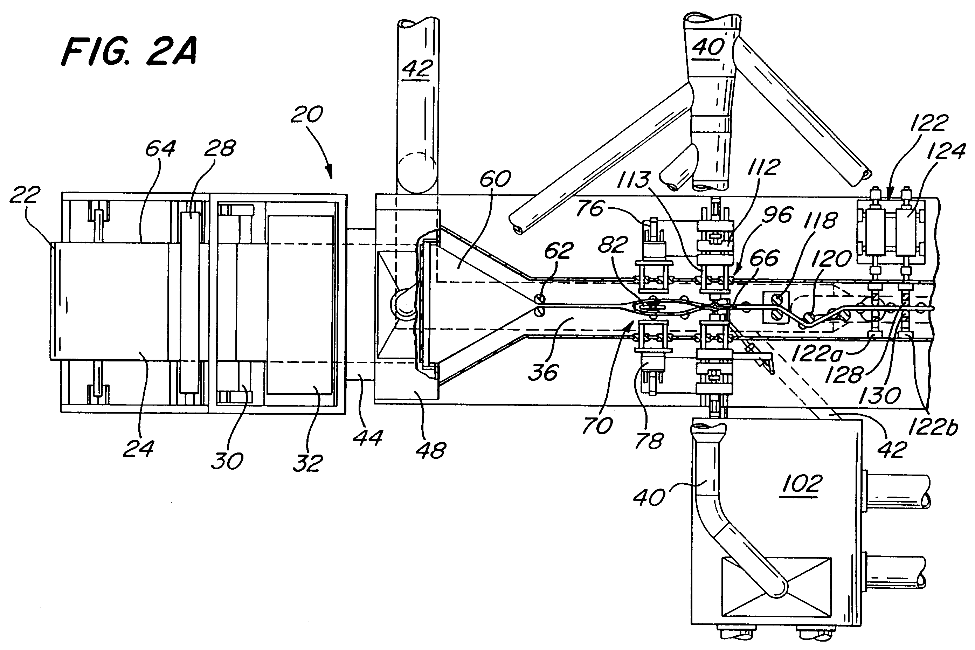

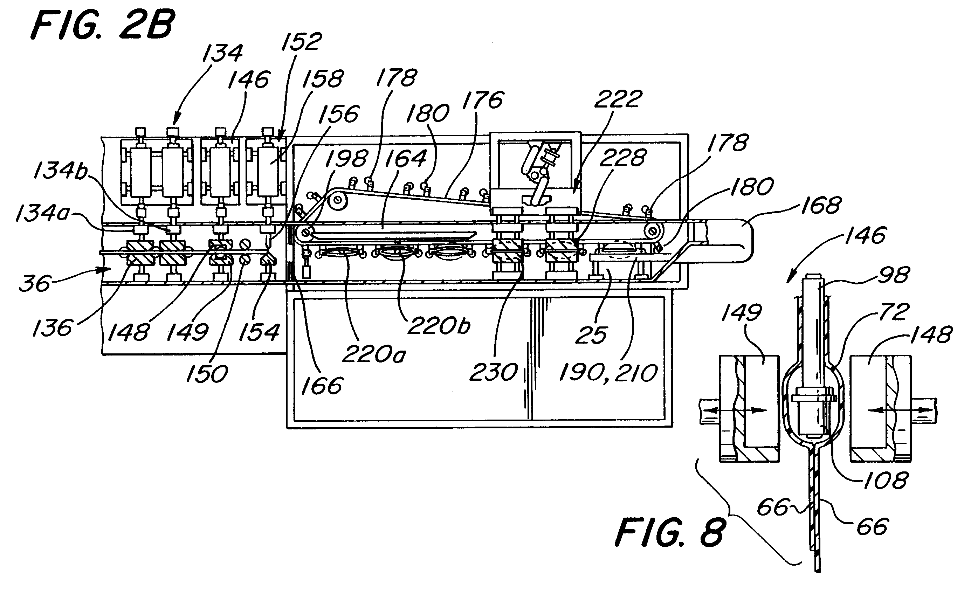

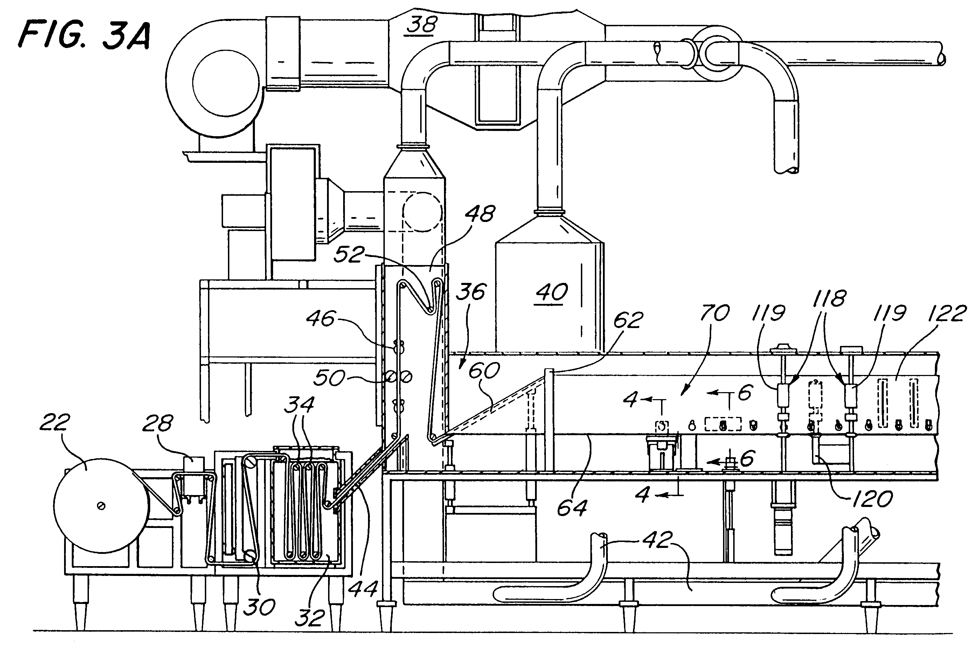

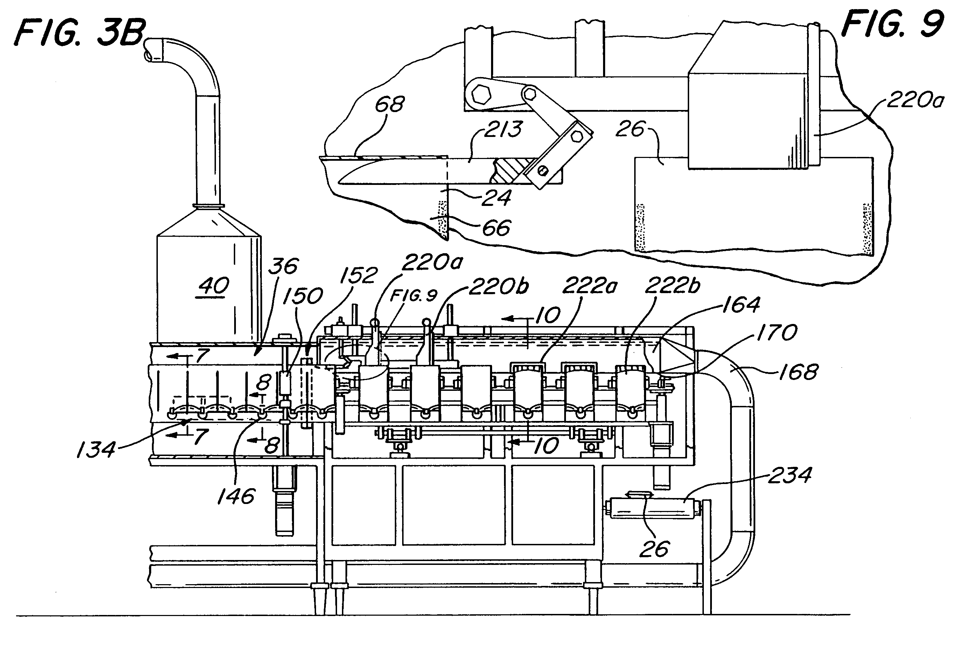

Referring to the drawings where like elements are identified by like numerals there is shown in Figure 1 a preferred pouch embodiment designated by the numeral 26. The pouch 26 of Figure 1 is manufactured by the pouch forming, filling and sealing apparatus which has been identified by the numeral 20 and particularly shown in Figures 2 and 3. The apparatus 20 transforms a roll 22 of thermoplastic film web 24 into a filled and sealed pouch 26. The pouch 26 of the type contemplated by the present invention and shown in Figure 1 will be discussed in further detail below. The description that follows immediately hereafter is that of the path of the film web 24 in forming the pouch 26.

Referring to Figures 2A and 3A, the roll 22 of the film web 24 is mounted horizontally on the apparatus 20. The film web 24 is unrolled from the roll 22 and fed through a splicer 28, which joins two rolls 22 together at the completion of one of the rolls 22. The film web 24 is guided by a film guide 30 into a film bath 32. A series of rollers 34 direct the film web 24 through several vertical passes through the film bath 32. The film bath is filled with H₂O₂, or similar liquid, for sterilizing the film web 24 and removing residues.

A chamber 36 preferably having a sterile, low oxygen atmosphere receives the film web 24 from the bath 32. The chamber 36 includes a filter system 38 wherein the atmosphere, preferably composed predominantly of nitrogen gas, is forced into the chamber 36 from above through a series of ducts 40. Simultaneously the gas is pulled from the chamber 36 from below through a series of return ducts 42. The filter system 38 has a series of filters to purify the atmosphere arriving from the return ducts 42 prior to returning it back into the chamber 36. In addition, the filter system 38 has a mechanism which introduces additional gas prior to the series of filters to compensate for losses in the system.

The film web 24 is carried from the film bath 32 to the chamber 36 via tunnel 44. The film web 24 passes directly from the film bath 32 into the sterilized chamber 36. The film web 24 moves vertically, passing through a series of air knives 46 in a film drying section 48 which both dries the web 24 and removes residue remaining on the film.

A film drive 50, the first of several, pulls the film web 24 through the apparatus 20. Upon the film passing through the film drying section 48, the web 24 passes through a dancer 52 which compensates for variances in the drives pulling the web 24. The drive guides the film web 24 by a series of rollers 54 from the drying section 48 to a pouch forming section 56.

The pouch forming section 56 in chamber 36 extends horizontally. The film web 24 moves left to right, as shown in Figures 2 and 3, in the chamber 36. Chamber 36 is sealed between the tunnel 44 and where the pouch 26 exits. In addition there is a positive pressure in the chamber 36 so any gas flow that results will move out of the sterile chamber 36.

A folding device 58 having a triangular shaped plate 60 and a pair of rollers 62 folds the film web 24 in half as it passes from the drying section 48. The folding device 58 forms its fold at the top or upper edge 68 and positions the pair of selvage edges 64 on the film depending downwardly and in close proximity to each other. The film web 24 thus turns from a single generally horizontal sheet to a pair of vertically extending film walls 66 connected by a fold at the upper edge 68.

The film web 24 is moved by drive 50 (and the other drives) in increments approximately equal to the width of the pouch 26. Each increment is indicated as "W" on Figure 1. As shown in Figures 2 and 3, the folded film web 24 moves through a series of operational stations to transform the web 24 into the pouch 26. These stations are located at specific locations along the run of the film web 24, with the summation of all the operations resulting in a pouch 26 as seen in Figure 1.

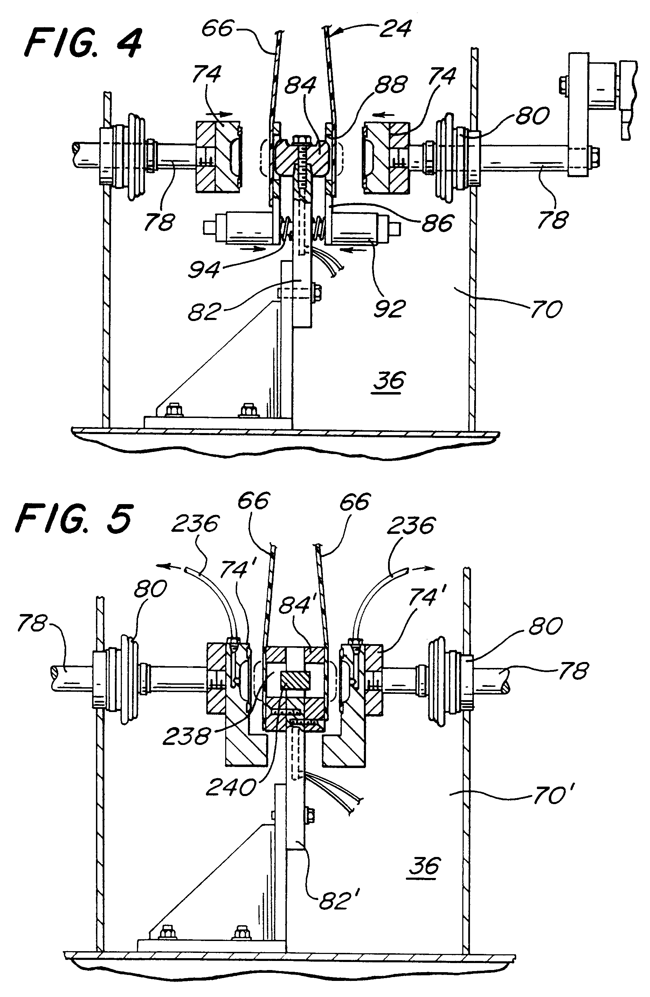

Referring again to Figures 2A and 3A and also to Figure 4, the film web 24 passes by a web stretching station 70 which forms a pocket 72 (Figure 1) in the film web 24. As shown in Figure 4, the web stretching station 70 has a pair of dies 74 which are moved by hydraulic cylinders 76 (Figure 2A) located outside of the chamber 36. A rod 78 connected to cylinder 76 extends through the walls of and into the chamber 36. A rubber boot 80 engages the rod 78 and the chamber walls and flexes with movement of the rod 78 to seal the chamber 36. A center portion 82 of the web stretching station 70 is positioned between the pair of film walls 66. A pair of ejectment guides 86 are mounted on the center portion 82 for movement inboard and outboard. Each guide 86 has a hole 88 for receiving a portion of a central form 84. The ejectment guides 86 are normally in an "out" position. When the film drive stops the web 24, the ejectment guides 86 are pulled inboard by a pair of solenoids 92 against the bias of a pair of compression springs 94. When the guides 86 are pulled inward, the film walls 66 are draped over the heated form 84 which projects through openings 88. The hydraulic cylinders 76 move the dies 74 inward into engagement with the form 84 and the ejectment guides 86 therein stretch the film web 24 between the die 74 and the form 84, forming the pocket 72. The pockets 72 formed by stretching the film web 24 (as shown in Figure 1) are key hole shaped, are aligned with each other and project outboard away from each other. The hydraulic cylinders 76 cycle back and the ejectment guides 86 move under the bias of the compression springs 94. After the solenoids 92 release, the film web 24 moves off of the form 84. The film web 24 then is moved one increment towards the next station by the drives.

Referring to Figure 5, a second embodiment is shown of a web stretching station 70'. The web stretching station 70' has a pair of dies 74' which are moved by hydraulic cylinders 76 located outside of the chamber 36. The forming portions of the dies 74' are attached to vacuum tubes 236. A center portion 82' of the web stretching station 70' is positioned between the pair of film walls 66 and includes a form 84' having a hollow center 238. A radiant heat block 240 is located in the hollow center 238. When the film web 24 stops for processing, the hydraulic cylinders 76 move the dies 74' inward toward engagement with the central form 84'. The radiant heat block 240 heats the film web 24. A vacuum created on the dies 74' through tubes 236 pulls the film web 24 into the forming portion of the dies 74' therein stretching the web 24 into the pocket 72 (Figure 1). The hydraulic cylinders 76 cycle back and a positive pressure is placed in the dies 74' moving the film web 24 away from the dies 74'. The film web 24 then is moved one increment to the next station.

The next station is a fitment insertion and securing station 96. Referring to Figure 1, a fitment or coupler 98, is used to make a connection into the reservoir section 100 to form an output for connection with, for example an intravenous syringe maintained within the patient's arm. An application for a Pouch for Administering Medical Fluids by Christine, WO-A-93 14736 describes in greater detail the preferred fitment 98 shown in Figure 1. This commonly assigned, copending application is herein incorporated by reference. However, other fitment forms and connection means are contemplated by the present invention.

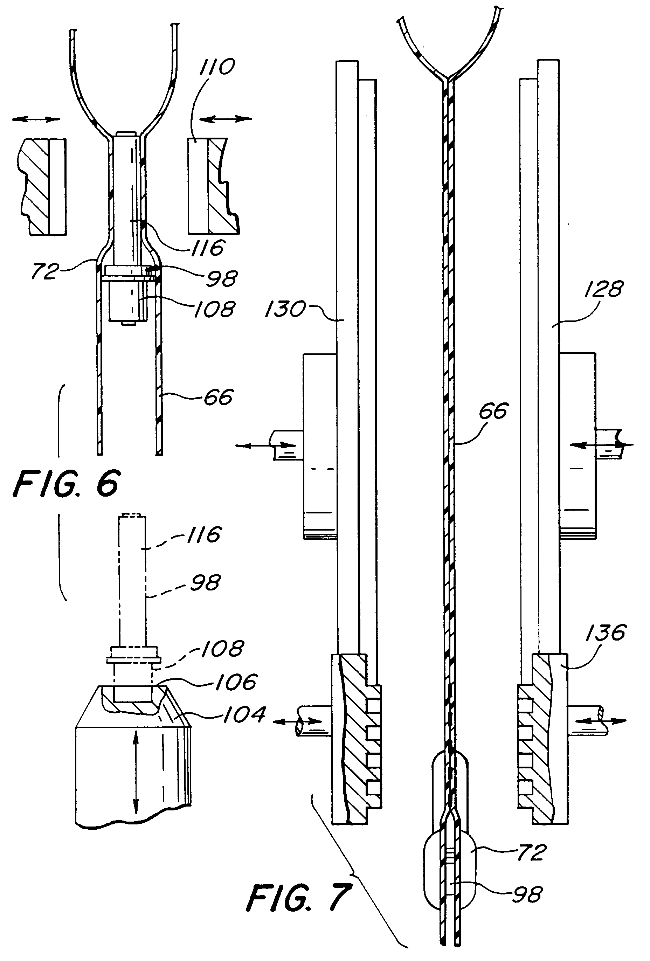

Referring specifically to Figure 2A, the fitments 98 are stored in a fitment feed 102, maintained in an atmosphere identical to that in chamber 36. Ducts 40 and return ducts 42 (Figure 3A) connect the feed mechanism 102 to the filter system 38. The fitments 98 are conveyed from the fitment feed 102 in a conventional manner. Upon reaching the chamber 36, a fitment 98 is oriented for insertion between the film walls 66. It is contemplated that the fitment 98 is received from the fitment feed 102 with tabs 103 (Figure 1) perpendicular to the fill walls 66. The fitment 98 is rotated prior to insertion so that the tabs 103 are parallel to the film walls 66. Referring to Figure 6, a hydraulic lift 104 is provided in chamber 36. The lift 104 includes a bore 106 for receiving an open bottom end 108 (Figure 1) of the fitment 98. The lift 104 moves the fitment upwardly, positioning it between the film walls 66 in alignment with the formed pocket 72. The bore 106 of the hydraulic lift 104 is maintained in the sterile chamber 36 and the lift 104 has a rubber boot similar to that on the rods.

The securing portion of the fitment insertion and securing station 96 includes a pair of heated dies 110. Dies 110 are moved by a pair of hydraulic cylinders 112 (Figure 2A) located outside of the chamber 36. A rod 113 connected to each of the hydraulic cylinders 112 extends through to the chamber 36 and is sealed by a rubber boot, similar to that shown in Figure 4. With the film web 24 stopped and the fitment 98 located between the film walls 66 by the hydraulic lift 104, the hydraulic cylinders 112 move the dies 110 toward each other into engagement with the two film walls 66 and join the walls 66 together by a pair of vertical strips 114 (Figure 1) positioned on opposite sides of an upper portion 116 of the fitment 98. After sufficient contact between the dies 110 and film web 24, the cylinders 112 move the dies 110 away from each other and the hydraulic lift 104 is lowered without the fitment 98. Thereafter, the drives move the film web 24 one increment "W" towards the next station.

As shown in Figures 2A and 3A, between the fitment insertion and securing station 96 and the next station is a second film drive 118 for pulling the film web 24 in increments. A second dancer 120 is also provided. The film drive 118 has a series of rollers 119 which press against the film web 24 from both sides. However, the rollers 119 are discontinuous in the area of the web 24 where the fitment 98 is located.

The next station, a side sealing station 122, differs from the previous stations in that it engages the film web 24 at two locations 122a and 122b. These two locations 122a and 122b are spaced one increment "W" apart. Sealing station 122 includes a pair of cylinders 124 positioned outside the chamber 36 and located only on one side. The cylinders 124, similar to those previously identified, each have a rod 126 that extends into the chamber 36 through a rubber boot. A die 128 is positioned on the end of rod 126. On the other side of the film web 24, an anvil 130 is fixedly positioned and normally spaced from the film web 24. The cylinders 124 move the dies 128 into engagement with one of the film walls 66 pushing the web 24 into engagement with the anvils 130. At the first location 122a, the die 128 and anvil 130 are heated such that when the cylinder 124 moves the die 128 and film web 24 toward and engages the anvil 130, the pair of walls 66 are sealed together to form a side seal 132 for two adjacent pouches 26 (Figure 1). The side seal 132 does not extend to the upper edge 68 (Figures 3A, 7 and 9). In the second location 122b, the die 128 and anvil 130 are chilled. Upon movement of the film web 24 one increment after completing the heat sealing of step 122a, the side seal 132 is chilled in order to quench the heated thermoplastic. While the first seal is formed by location 122b a second side seal 133 is initiated at the first station 122a.

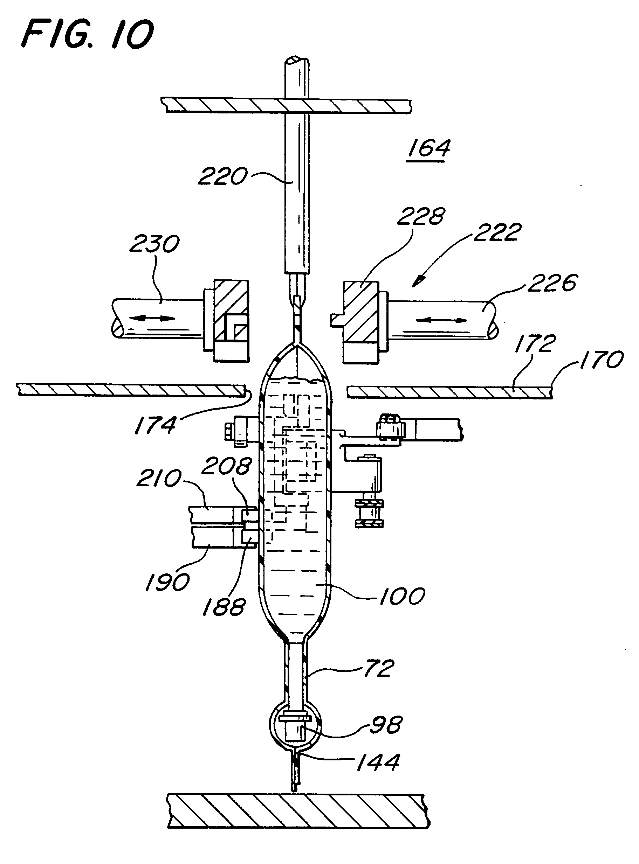

Referring to Figures 2B and 3B, a bottom sealing station 134, the next station, works identically to the side sealing station 122, just on a different portion of the film web 24. Referring specifically to Figure 7, the bottom sealing station 134 has a pair of dies 136 which form a gusset 138 on the film web 24. The gusset 138 becomes the bottom 140 of the pouch 26 (Figure 1) and its reservoir 100. In one operation, the dies 136 seal between the fitments 98 thereby doing the first half of pouch 26 and the second half of a previous pouch. As in the side sealing station 122, a first location 134a includes heated die 136 and anvil 137 for sealing the film web 24 together. At the second location 134b a chilled die 136 and anvil 137 are used for quenching the gusset 138 formed at the first location 134a. While the second location 134b is quenching the first half of the gusset 138, the first location 134a seals the second half of the gusset 138 on the opposite side of the fitment 98 on the pouch 26.

The next station as shown in Figures 2B and 3B is the formation of a peelable seal 144 (Figure 1) made by a fitment sealing station 146. This peelable seal 144 is positioned around the fitment 98 and below the bottom 140 of the pouch 126 (as defined by gusset 138). The peelable seal 144, as shown in Figure 1, includes a "U" shape and is formed by a single strike of die 148 against anvil 149. The die 148 and anvil 149 are particularly shown in Figure 8. Die 148 and anvil 149 are at a lower temperature than heated dies 130, 132, and 136 of the side sealing station 122a and bottom sealing station 134a. This lower temperature forms a seal 144 that is relatively weaker and thus will permit separation of the walls 66. This weaker/peelable seal is acceptable because seal 144 does not have to support the pressure of the liquid upon filling the reservoir 100 of the pouch 26. Secondly, the peelable seal 144 must be broken to grant access to the open bottom end 108 of the fitment 98 when the pouch 26 to be used.

Again referring to Figures 2B and 3B, a primary drive 150 is located after the fitment sealing station 146. Dancers 52 and 120 are located between the drives 50, 118 and 150 to allow for any variance in the starting and stopping of the drives as the drives move the film web 24 one increment toward the next station. The drives ensure that the film web 24 is held taut therein keeping the web 24 properly positioned as it moves in increments through the chamber 36 and allows the operational stations to transform the web 24 into the pouch 26.

The last station in chamber 36 is a cutting station 152. The cutting station has a rigidly mounted anvil 154 and a cutting die 156. Cutting die 156 is moved by a cylinder 158. The cutting die 156 moves into engagement with the film web 24 and forces the film web 24 into engagement with the anvil 154, severing the film web 24 along the side of the pouch 26 from the upper folded edge 68 to the selvage 64 at the midpoint of side seal 132. This cutting action results in the pouch 26 separating from the continuous web 24.

It is contemplated that cylinders could be located on both sides of the chamber 36 having movable dies instead of a rigid anvil and a movable die in each of the stations described above.

Adjacent chamber 36 is a partial upper half chamber 164. Partial chamber 164 receives sterile, low oxygen atmosphere from the chamber 36 through a slot 166 (Figure 3B) through which the pouch 26 passes. A return duct 168 draws the atmosphere through the partial chamber 164 to the filter system 38. Referring also to Figure 10, the lower wall 170 of the chamber 164 is located just below the top of the side seal 132 on the pouch 26. Only an upper portion of the pouch 26 is in the partial chamber 164. The lower portion of the pouch 26 depends below the wall 170 which is formed by a flexible plate 172 having a slot 174. The pressure in the partial chamber 164 is greater than that outside the chamber formed therein. This positive pressure causes the sterile atmosphere to flow out of the partial chamber 164 and prevents a flow of air in the other direction. As indicated above, the filter system 38 compensates for losses in the system.

Referring to Figure 2B, the pouches 26 are transported through chamber 164 by a chain drive 176 having a plurality of clamps 178, 180. The chain drive 176 as generally contemplated by the present invention may be similar to the type manufactured by Klöckner-Bartelt of Germany. The chain drive 176 moves in increments, similar to the motion of the film web 24 caused by the drives 50, 118 and 150. However, the chain drive 176 and the film web 24 do not have synchronized motion.

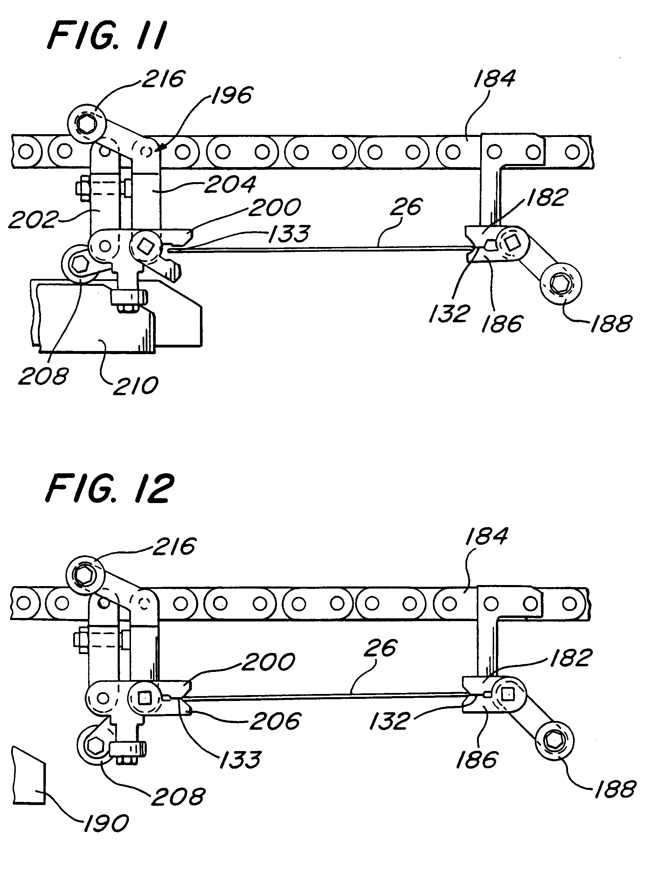

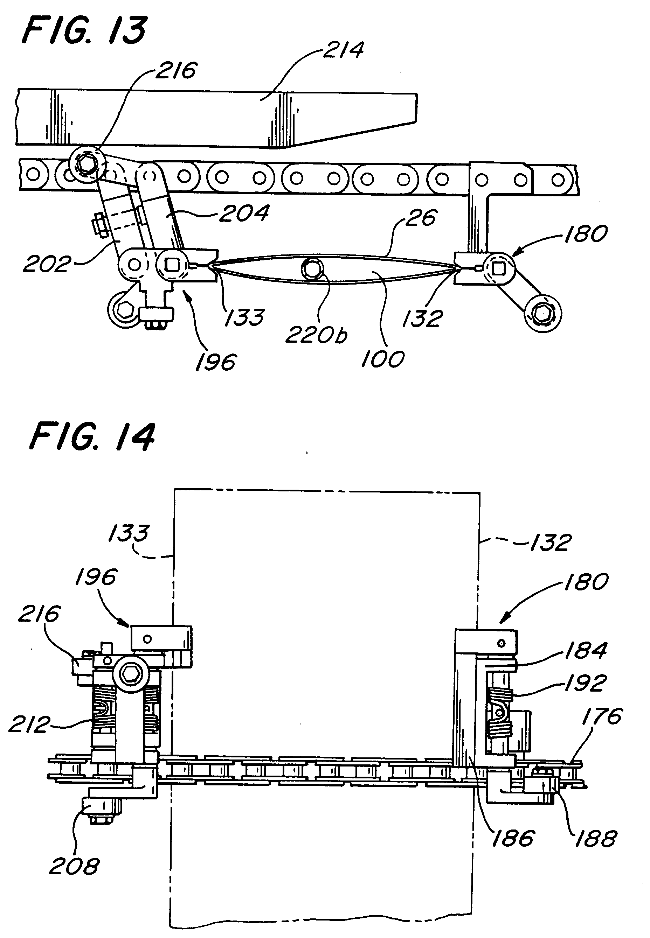

Referring specifically to Figures 11 and 12, as the pouch 26 exits the chamber 36, the primary drive 150 pushes the film web 24 one increment to allow the cutting station 152 to sever the pouch 26. The side 132 of the pouch 26 which is one increment (i.e. the width "W" of the pouch 26) ahead of the cutting station 152, exits chamber 36 and the upper portion enters chamber 164. A leading edge clamp 178 having a block 182 secured to a chain link 184 and a jaw 186 pivotally mounted to the block 182 receives the pouch side 132. An engaging wheel 188 connected to the jaw 186 contacts a leading edge cam rail 190 to rotate the jaw 186 away from the block 182 (not shown) against the bias of a torsion spring 192 (Figure 14). Pouch side 132 is positioned between the block 182 and the jaw 186 as the primary drive 150 stops the movement of the film web 24. Just prior to the cutting station 152 severing the pouch 26 from the film web 24, the chain drive 176 moves causing the engaging wheel 188 to move off the leading edge cam rail 190 resulting in the jaw 186 rotating closed and clamping pouch side 132 between the block 182 and the jaw 186. The pouch 26, which is severed from the web 24, is retained by the leading edge clamp 178 as the chain drive 176 continues to move.

With the chain drive 176 continuing to move, a trailing edge clamp 180 having a block 200 attached to the chain drive 176 by a pair of links 202 and 204 rotates around sprocket 198 (Figure 2B) of the chain drive 176. A jaw 206 pivotally mounted to the block 200, rotated by a second engaging wheel 208 engages a trailing edge cam rail 210. Block 200 is positioned to receive the second or trailing side 133 of the pouch 26. With the pouch 26 being moved by the leading edge clamp 178, the cam rail 210 is tapered so that the jaw 206 rotates, biased by a torsion spring 212 (Figure 14), sandwiching the side 133 between block 200 and jaw 206. The chain drive 176 stops when another leading edge clamp 180 is positioned to receive the next pouch. The film web 24 is then moved as described above.

Referring to Figure 9, as the film web 24 enters into the partial chamber 164 from chamber 36 and is severed into pouches 26 by the cutting station 152, the upper edge 68 of the pouch 26, where the film web 24 is folded in half, is slit and separates the upper edge 68 of the two walls 66. The slitting of edge 68 is performed by knife 213.

Referring to Figure 13, as the pouch 26 moves through the chamber 164, a third cam rail 214 contacts an engaging wheel 216 attached to the link 204 and moves the trailing edge clamp 180 towards the leading edge clamp 178. The movement of the trailing edge clamp 180 positions side 133 closer to the leading edge clamp 178 and side 132. This movement results in the two walls 66 of the pouch 26 separating to create a gap and to expose reservoir 100.

As shown in Figure 3B, a pair of diving fill tubes 220 are located above the pouches 26 at two adjoining positions. The first fill tube 220a (see also Figure 9) dives into the pouch 26 and partially fills the reservoir 100 formed therein. The second diving fill tube 220b (see also Figure 13) completes the filling of the reservoir 100. The diving fill tubes 220 are raised prior to the chain drive 176 moving the pouches 26.

Figure 10 particularly illustrates the next station which is a top sealing station 222. As shown in Figure 3B, the top sealing station 222 has two locations 222a and 222b spaced apart one increment "W." The top sealing station 222 has a pair of cylinders 224 outside chamber 164 located only on one side. A movable die 228 is attached to each of the cylinders 224 via a rod 226 that extends through rubber boots that seal the chamber 164. Located on the other side of the pouch 26 is a fixed anvil 230 which is normally spaced from the pouch 26. The cylinders 224 move the dies 228 toward the pouch 26 and into engagement with the anvils 230. Referring to Figure 10, at the first location 222a, the die 228 and anvil 230 are heated such that when the cylinder 224 moves the die 228 into engagement with the pouch 26, the pair of walls 66 are sealed together, sealing the top 232 of the pouch 26 (Figure 1). Also a punch thereon produces a pair of hanging holes 234. In the second location 222b the dies 228 and 230 are chilled.

The final station 250 is where the engaging wheels 188 and 208 contact the cam rails 190 and 210 again and rotate the jaws 186 and 206 away from the blocks 180 and 200, therein allowing the filled and sealed pouch 26 to drop to a conveyor 234, which transports the filled pouch 26. This final station 260 is best seen in Figures 2B and 3B.

The present invention produces a pouch in the sterile atmosphere retained within chamber 36. The sterile pouch 26 is closed in its initial formation except for the gap above side seals 132, 133 and the upper edge 68. Upon entering the partial chamber 164, the fold of the upper edge 68 is cut by the knife 213 to expose the reservoir 100 for filling. When opening the reservoir 100, the upper edge 68 is positioned in a sterile atmosphere of chamber 164 while the transfer mechanism for the pouch, i.e., the chain drive 176, is positioned below the chamber 164. This method and apparatus for forming the pouch is contemplated to produce a sterile container in an efficient and cost effective manner.

## Claims

1. A method for forming, filling and sealing a pouch having a fitment, comprising the steps of:
a) providing a film web (24) having a pair of longitudinally extending selvage edges (64),
b) folding the web (24) in half so that the web (24) defines a pair of parallel walls (66),
c) inserting a fitment (98) between the parallel walls (66) of the film web (24) and securing the fitment to the walls,
d) sealing the two walls (66) of the film web together to form a reservoir (100) between the seals (132, 140) and the parallel walls (66),
e) cutting the film web (24) vertically into separate pouches (26),
f) filling the pouch (26) and sealing it
**characterized** by
creating and maintaining a sterilized chamber (36) and moving the film web (24) therethrough and creating a sterilized partial chamber (164) connected to the sterilized chamber, wherein an upper portion of the pouch (26) moving through the partial chamber by drive means is located in the partial chamber (164) and a lower part of the pouch (26) depends below the chamber and forming in that chamber a pocket (72) in each of the walls (66) of the film web (24) in alignment with each other and in proximity to the selvage edge (64) by stretching the film web (24) prior to inserting the fitment (98), so that the fitment is inserted between the two pockets formed in the parallel walls (66) of the film web (24).

2. The method of claim 1, characterized in that the edge defined by the fold of the film web (24) is an upper edge, that slitting the upper edge of the pouch (26) in the partial chamber (164) is performed prior to filling the pouch (26) and in that sealing the upper portion of the pouch (26) seals the upper edge.

3. The method of claim 1, characterized by providing in the partial chamber (164) the step of forming a "U" shaped peelable seal (144) between the two walls (66) of the film web (24) around the fitment (98).

4. The method of claim 3, characterized by providing the step of sterilizing the film web (24) by passing the film web through a sterilized bath (32) prior to moving the film web into the chamber (36).

5. The method of claim 1, characterized by sealing the two walls (66) of the film web (24) together in proximity to the fitment (98) retaining the fitment (98) to the web, sealing the two walls (66) of the film web together in vertical strips defining sides of the pouch (26) and sealing the two walls (66) of the film web (24) together between the vertical strips and the fitment defining the bottom of the pouch (26).

6. The method of one of the claims 1 to 5, characterized in that the drive means moves the film web (24) in increments within the chamber (36) and the steps of forming the pocket (72), retaining the fitment (98) and sealing the walls (66) Forming the pouch (26) occur, when the film web is stationary.

7. The method of claim 1, characterized in that the filling of the pouch (26) comprises moving the location of one side of the pouch relative to the other side of the pouch therein creating a space between the walls (66) of the film web (24) and inserting a fill pipe into the space between the sides of the film web.

8. The method of claim 6, characterized in that the sealing of the two walls (66) of the film web (24) together in vertical strips further comprises striking the film web (24) with a heated die and moving the film web (24) one increment and striking the film web (24) with a chilled die.

9. An apparatus (20) for forming, filling and sealing a pouch (26) formed of a film web (24) having a pair of longitudinal selvage edges (64), comprising a folding device for folding the film web inhalf, a fitment insertion device for mounting and attaching a fitment to the film web, a sealing device for sealing the two film walls together in a vertical strip, a cutting device for cutting the pouch from the film web and a pouch filling machine for opening the top of the pouch for allowing insertionn of a filling tube for filling the pouch and a sealing device for sealing the top of the pouch
**characterized** by:
a sterilized atmosphere chamber (36);
a filter means (38) connected to the chamber (36) to filter the atmosphere;
a tunnel (44) extending from the film bath (32) to the chamber (36) for moving the film web (24) from the film bath to the chamber;
drive means (50) for moving the film web through the chamber in increments;
the folding device (58) being carried in the chamber (36) for folding the film web (24) in half such that the selvage edges (64) are in close proximity to each other and define a pair of parallel vertical walls (66) in close proximity to each other and the fold defining an upper edge (68);
web stretching means (70, 70') having a pair of dies (74, 74') for engaging the film web (24) carried in the chamber (36) for stretching each of the walls (66) of the film web (24) at aligned spots in close proximity to the selvage edge (64);
the fitment insertion device (96) being carried in the chamber (36) for inserting the fitment (98) between the two walls (66) of the film web (24) and attaching the fitment (98) to the film web (24);
a bottom sealing machine (134) carried in the chamber (36) for sealing the two walls (66) of the film web (24) between the vertical seals (132, 133) and the fitment (98) forming a bottom of the pouch (26);
a "U" seal (144) forming machine (146) carried in the chamber (36) for sealing the walls (66) of the film web below the bottom (140) and around the fitment (98);
a sterilized atmosphere partial chamber (164) being connected to the chamber (36) and receiving the atmosphere from the sterilized chamber (36) and having a duct (168) for moving the atmosphere from the upper sterilized chamber to the filter means (38); and
a second drive means (176) located below the partial chamber (164) for moving the pouch (26) through the partial chamber;
the pouch filling machine being carried in the partial chamber and having a slitting device (213) for opening the top of the pouch (26).

10. The apparatus of claim 9, wherein a web stretching means comprises a die (74) on one side of the film web wall (66) and a heated form (84) on the other side of the wall moved together with the film web wall interposed for forming a pocket (72).

11. The apparatus of claim 9, wherein web stretching means (70') comprises a die (74') having a form attached to a vacuum source (236) on one side of the film web wall (66) and having a hole (238) containing a heat means (240) on the other side of the film web wall for moving together with the film web wall interposed for forming a pocket (72).

12. The apparatus of claim 9, wherein the sealing machine has two stations (122a, 122b) and the first sealing machine (122) has a heated die (128) for scaling the film walls (66) and the second sealing machine (122b), spaced from the first sealing machine by the width of the pouch, having a chilled die (128) for striking the two walls of the film web again to strengthen the seal formed on the first sealing machine.

13. The apparatus of claim 9, characterized by further comprising;
a film roll (22) holding means for holding a roll of the film web;
a film bath (32) for passing the film web (24) through for sterilizing and cleaning the film web; and
a tunnel (44) extending from the film bath (32) to the chamber (36) for moving the film web (24) from the film bath to the chamber.

## Patentansprüche

1. Verfahren zum Formen, Füllen und Versiegeln eines Beutels, der ein Anschlußstück aufweist, umfassend die Schritte:
a) Vorsehen einer Folienbahn (24), die ein Paar von longitudinal sich erstreckenden Bahnversiegelungskanten (64) aufweist,
b) hälftiges Umfalten der Folienbahn (24), derart, daß die Folienbahn (24) ein Paar von parallelen Wänden (66) definiert,
c) Einfügen eines Anschlußstückes (98) zwischen die parallelen Wände (66) der Folienbahn (24) und Befestigen des Anschlußstückes an den Wänden,
d) Versiegeln der beiden Wände (66) der Folienbahn (24) miteinander, um einen Speicher (100) zwischen den Siegelverschlüssen (132, 140) und den parallelen Wänden (66) zu bilden,
e) vertikales Abschneiden der Folienbahn (24) in getrennte Beutel (26),
f) Füllen des Beutels (26) und Verschließen desselben,
**gekennzeichnet durch**
Erzeugen und Beibehalten einer sterilisierten Kammer (36) und Bewegen der Folienbahn (24) durch sie hindurch und Erzeugen einer sterilisierten Teilkammer (164), die mit der sterilisierten Kammer (36) verbunden ist, wobei ein oberer Abschnitt des Beutels (26), der sich mit Hilfe von Antriebsmitteln durch die Teilkammer bewegt, in der Teilkammer (164) plaziert wird, während ein unterer Abschnitt des Beutels (26) unter der Kammer herabhängt, und Formen einer Tasche (72) in dieser Kammer in jeder der Wände (66) der Folienbahn (24), welche ausgefluchtet sowie in der Nähe der Bahnversiegelungskanten (64) sind, durch Strecken der Folienbahn (24) vor dem Einfügen des Anschlußstückes (98), so daß das Anschlußstück zwischen den beiden, in den parallelen Wänden (66) der Folienbahn (24) geformten Taschen eingefügt wird.

2. Verfahren nach Anspruch 1, dadurch gekennzeichnet, daß die durch die Falte in der Folienbahn (24) definierte Kante eine obere Kante ist; daß das Aufschlitzen der oberen Kante des Beutels (26) in der Teilkammer (164) vor dem Füllen des Beutels (26) durchgeführt wird; und daß das Versiegeln des oberen Abschnittes des Beutels (26) die obere Kante dicht versiegelt.

3. Verfahren nach Anspruch 1, gekennzeichnet durch das Durchführen des Schrittes des Ausbildens einer 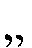 U"-förmigen, abschälbaren Dichtung (144) in der Teilkammer (164) zwischen den beiden Wänden (66) der Folienbahn (24) um das Verbindungsstück (98) herum.

4. Verfahren nach Anspruch 3, gekennzeichnet durch das Durchführen eines Schrittes des Sterilisierens der Folienbahn (24) durch Hindurchlaufenlassen der Folienbahn durch ein sterilisiertes Bad (32) vor dem Bewegen der Folienbahn in die Kammer (36).

5. Verfahren nach Anspruch 1, gekennzeichnet durch verbindendes Versiegeln der beiden Wände (66) der Folienbahn (24) in der Nähe des Anschlußstückes (98) an der Folienbahn; Versiegeln der beiden Wände (66) aneinander in vertikalen Streifen, welche die Seiten des Beutels (26) definieren; und verbindendes Versiegeln der beiden Wände (66) der Folienbahn (24) zwischen den vertikalen Streifen und dem, den Boden des Beutels (26) definierenden, Anschlußstück.

6. Verfahren nach einem der Ansprüche 1 bis 5, dadurch gekennzeichnet, daß die Antriebsmittel die Folienbahn schrittweise in der Kammer (36) bewegen, und daß die Schritte des Formens der Tasche (72), die das Anschlußstück (98) festhält, und das Versiegeln der den Beutel (26) formenden Wände (66) stattfindet, wenn die Folienbahn stillsteht.

7. Verfahren nach Anspruch 1, dadurch gekennzeichnet, daß das Füllen des Beutels (26) das Bewegen des Ortes einer der Seiten des Beutels relativ zu der anderen Seite des Beutels das Schaffen eines Raumes darin, zwischen den Wänden (66) der Folienbahn (24), und das Einschieben einer Einfülleitung in den Raum zwischen den Seiten der Folienbahn umfaßt.

8. Verfahren nach Anspruch 6, dadurch gekennzeichnet, daß das Versiegeln der beiden Wände (66) der Folienbahn (24) aneinander in vertikalen Streifen weiter das Aufbringen eines Stoßes auf die Folienbahn (24) mit einem erhitzten Stempel und das Bewegen der Folienbahn (24) um einen einzelnen Schritt sowie das Aufbringen eines Stoßes mit einem kalten Stempel umfaßt.

9. Vorrichtung (20) zum Formen, Füllen und Versiegeln eines Beutels (26), geformt aus einer Folienbahn (24), die ein Paar von longitudinalen Bahnversiegelungskanten (64) aufweist und die umfaßt: eine Faltvorrichtung zum hälftigen Umfalten der Folienbahn; eine Anschlußstück-Einfügungsvorrichtung zum Einbauen und Befestigen eines Anschlußstückes an der Folienbahn; eine Versiegelungsvorrichtung zum Versiegeln der beiden Folienwände aneinander in einem vertikalen Streifen; eine Abschneidevorrichtung zum Abschneiden des Beutels von der Folienbahn; und eine Beutelfüllmaschine zum Öffnen des oberen Endes des Beutels, um das Einschieben einer Einfülleitung zum Füllen des Beutels zu ermöglichen; und eine Versiegelungsvorrichtung zum Versiegeln des oberen Endes des Beutels
**gekennzeichnet durch**
eine Kammer (36) mit sterilisierender Atmosphäre;
eine Filtereinrichtung (38), verbunden mit der Kammer (36), um die Atmosphäre zu filtern;
einen Tunnel (44), der sich vom Folienbad (32) zur Kammer (36) zum Bewegen der Folienbahn (24) vom Folienbad (32) zu der Kammer (36) erstreckt;
Antriebsmittel (50) zum schrittweisen Bewegen der Folienbahn durch die Kammer;
wobei die Faltvorrichtung (58) in die Kammer (36) zum hälftigen Falten der Folienbahn (24) in der Weise aufgestellt wird, daß die Bahnversiegelungskanten (64) sich in engster Nähe zueinander befinden und ein Paar von parallelen, vertikalen Wänden (66) in engster Nähe zueinander definieren; und die Falte einen oberen Rand (68) definiert;
Gewebestreckmittel (70, 70') mit einem Paar von Stempeln (74, 74') zum Andrücken an die in die Kammer (36) getragene Folienbahn (24), um die Wände (66) der Folienbahn (24) an miteinander in einer Flucht liegenden Stellen in engster Nähe zur Bahnversiegelungskante (64) zu strecken;
wobei die Anschlußstück-Einfügungsvorrichtung (96) in die Kammer (36) gebracht wird, um das Anschlußstück (98) zwischen die beiden Wände (66) der Folienbahn (24) einzufügen und das Anschlußstück (98) an der Folienbahn (24) zu befestigen;
eine Bodenversiegelungsmaschine (134), die in der Kammer (36) gebracht wird, um die beiden Wände (66) der Folienbahn (24) zwischen den vertikalen Versiegelungen (132, 133) und dem, einen Boden des Beutels (26) bildenden Anschlußstück (98) zu versiegeln;
eine, eine 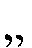 U"-Dichtung erzeugende Maschine (146), die in die Kammer gebracht wird, um die Wände (66) der Folienbahn unter dem Boden (140) und um das Anschlußstück (98) herum zu versiegeln;
wobei eine Teilkammer (164) mit sterilisierter Atmosphäre an die Kammer (36) angeschlossen ist und die Atmosphäre von der sterilisierten Kammer (36) aufnimmt, und versehen mit einem Kanal (168) zum Bewegen der Atmosphäre aus der oberen sterilisierten Kammer zu der Filtereinrichtung (38); und
eine zweite Antriebseinrichtung (176), die unter der Teilkammer (164) plaziert ist, zum Bewegen des Beutels (26) durch die Teilkammer;
wobei die Beutelfüllmaschine in der Teilkammer gebracht wird und eine Aufschlitzvorrichtung (213) zum Öffnen des oberen Endes des Beutels (26) aufweist.

10. Vorrichtung nach Anspruch 9, in der ein Gewebestreckmittel einen Stempel (74) auf einer Seite der Folienwand (66) und eine beheizte Form (84) auf der anderen Seite der Wand umfaßt, die zusammen mit der zwischengefügten Folienbahn zur Bildung einer Tasche (72) bewegt wird.

11. Vorrichtung nach Anspruch 9, in der die Gewebestreckmittel (70') einen Stempel (74') mit einer an eine Vakuumquelle (236) angeschlossenen Form auf einer Seite der Folienwand (66) und mit einem Loch (238), das eine Heizeinrichtung (240) enthält, auf der anderen Seite der Folienwand umfaßt, die sich mit der dazwischengefügten Folienwand zum Formen einer Tasche zusammen bewegen.

12. Vorrichtung nach Anspruch 9, in der die Versiegelungsmaschine zwei Stationen (122a, 122b) aufweist, und die erste Versiegelungsmaschine (122) einen beheizten Stempel (128) zum Versiegeln der Folienwände (66) aufweist, und die zweite Versiegelungsmaschine (122b), die um die Breite des Beutels beabstandet ist, einen kalten Stempel (128) aufweist zum erneuten Aufbringen eines Stoßes auf die beiden Wände der Folienbahn, um die durch die erste Versiegelungsmaschine geformte Abdichtung zu verstärken.

13. Vorrichtung nach Anspruch 9, dadurch gekennzeichnet, daß sie weiter umfaßt:
eine, eine Folienrolle (22) halternde Einrichtung zum Haltern einer Rolle der Folienbahn;
ein Folienbad (32) zum Hindurchlaufenlassen der Folienbahn (24) für das Sterilisieren und Reinigen der Folienbahn; und
einen Tunnel (44), der sich vom Folienbad (32) zur Kammer (36) zum Bewegen der Folienbahn (24) aus dem Folienbad hin zur Kammer erstreckt.

## Revendications

1. Procédé pour former, remplir et sceller un sachet ayant un raccord, comportant les étapes consistant à :
a) fournir une bande de film (24) ayant deux bords de lisière s'étendant longitudinalement (64),
b) plier la bande (24) en deux de sorte que la bande (24) définisse deux parois parallèles (66),
c) insérer un raccord (98) entre les parois parallèles (66) de la bande de film (24) et fixer le raccord sur les parois,
d) sceller ensemble les deux parois (66) de la bande de film pour former un réservoir (100) situé entre les joints (132, 140) et les parois parallèles (66),
e) couper la bande de film (24) verticalement en sachets séparés (26),
f) remplir le sachet (26) et le rendre étanche,
caractérisé en ce qu'il comporte les étapes consistant à
créer une chambre stérile (36) et la maintenir stérile et à déplacer la bande de film (24) à travers celle-ci et à créer une chambre partielle stérile (164) reliée à la chambre stérile, une partie supérieure du sachet (26) se déplaçant à travers la chambre partielle par l'intermédiaire de moyens d'entraînement étant positionnée dans la chambre partielle (164) et une partie inférieure du sachet (26) étant suspendue en dessous de la chambre et à former dans cette chambre une poche (72) dans chacune des parois (66) de la bande de film (24), en alignement l'une avec l'autre et à proximité du bord de lisière (64) en étirant la bande de film (24), avant d'insérer le raccord (98), de sorte que le raccord est inséré entre les deux poches formées dans les parois parallèles (66) de la bande de film (24).

2. Procédé selon la revendication 1, caractérisé en ce que le bord défini par le pli de la bande de film (24) est un bord supérieur, et en ce que fendre le bord supérieur du sachet (26) dans la chambre partielle (164) est réalisé avant de remplir le sachet (26) et en ce que sceller la partie supérieure du sachet (26) scelle le bord supérieur.

3. Procédé selon la revendication 1, caractérisé en ce qu'on réalise dans la chambre partielle (164) l'étape consistant à former un joint pelable en forme de U (144) entre les deux parois (66) de la bande de film (24), autour du raccord (98).

4. Procédé selon la revendication 3, caractérisé en ce qu'il comporte l'étape consistant à stériliser la bande de film (24) en faisant passer la bande de film à travers un bain de stérilisation (32) avant de déplacer la bande de film à l'intérieur de la chambre (36).

5. Procédé selon la revendication 1, caractérisé en ce que le scellage des deux parois (66) de la bande de film (24) ensemble à proximité du raccord (98) retient le raccord (98) sur la bande, le scellage des deux parois (66) de la bande de film ensemble en bandes verticales définit les côtés du sachet (26) et le scellage des deux parois (66) de la bande de film (24) ensemble entre les bandes verticales et le raccord définit le fond du sachet (26).

6. Procédé selon l'une quelconque des revendications 1 à 5, caractérisé en ce que les moyens d'entraînement déplacent la bande de film (24) par incréments dans la chambre (36) et les étapes consistant à former la poche (72), maintenir le raccord (98) et sceller les parois (66) constituant le sachet (26) sont réalisées lorsque la bande de film est stationnaire.

7. Procédé selon la revendication 1, caractérisé en ce que le remplissage du sachet (26) consiste à déplacer l'emplacement d'un premier côté du sachet par rapport à l'autre côté du sachet en créant un espace entre les parois (66) de la bande de film (24) et à insérer un tuyau de remplissage dans l'espace existant entre les côtés de la bande de film.

8. Procédé selon la revendication 6, caractérisé en ce que le scellage des deux parois (66) de la bande de film (24) ensemble en bandes verticales consiste de plus à frapper la bande de film (24) à l'aide d'une matrice chauffée et à déplacer la bande de film (24) d'un incrément et frapper la bande de film (24) avec une matrice fortement refroidie.

9. Dispositif (20) pour former, remplir et sceller un sachet (26) formé d'une bande de film (24) ayant deux bords de lisière longitudinaux (64), comportant un dispositif de pliage pour plier en deux la bande de film, un dispositif d'insertion de raccord pour monter et fixer un raccord sur la bande de film, un dispositif de scellage pour sceller les deux parois de film ensemble selon une bande verticale, un dispositif de découpe pour découper le sachet à partir de la bande de film et une machine de remplissage de sachet destinée à ouvrir la partie supérieure du sachet pour permettre l'insertion d'un tube de remplissage pour remplir le sachet et un dispositif de scellage pour sceller la partie supérieure du sachet,
caractérisé en ce qu'il comporte :
une chambre (36) à atmosphère stérile,
des moyens de filtration (38) reliés à la chambre (36) pour filtrer l'atmosphère,
un tunnel (44) s'étendant à partir d'un bain pour film (32) vers la chambre (36) pour déplacer la bande de film (24) depuis le bain pour film vers la chambre,
des moyens d'entraînement (50) pour déplacer la bande de film à travers la chambre, par incréments,
le dispositif de pliage (58) étant supporté dans la chambre (36) pour plier en deux la bande de film (24) de sorte que les bords de lisière (64) sont à proximité étroite l'un de l'autre et définissent deux parois verticales parallèles (66) situées à proximité étroite l'une de l'autre et le pli définit un bord supérieur (68),
des moyens d'étirage de bande (70, 70') ayant deux matrices (74, 74') destinées à venir en contact avec la bande de film (24) supportée dans la chambre (36) pour étirer chacune des parois (66) de la bande de film (24) au niveau de points alignés situés à proximité étroite du bord de lisière (64),
le dispositif d'insertion de raccord (96) étant supporté dans la chambre (36) pour insérer le raccord (98) entre les deux parois (66) de la bande de film (24) et fixer le raccord (98) sur la bande de film (24),
une machine de scellage de fond (134) supportée dans la chambre (36) pour sceller les deux parois (66) de la bande de film (24) entre des joints verticaux (132, 133) et le raccord (98) en formant le fond du sachet (26),
une machine (146) de formation de joint en U (144) supportée dans la chambre (36) pour sceller les parois (66) de la bande de film en dessous du fond (140) et autour du raccord (98),
une chambre partielle à atmosphère stérile (164) étant reliée à la chambre (36) et recevant l'atmosphère provenant de la chambre stérile (36) et ayant un conduit (168) destiné à déplacer l'atmosphère depuis la chambre stérile supérieure vers les moyens de filtration (38), et
des seconds moyens d'entraînement (176) positionnés en dessous de la chambre partielle (164) pour déplacer le sachet (26) à travers la chambre partielle,
la machine de remplissage de sachet étant supportée dans la chambre partielle et ayant un dispositif de fendage (213) pour ouvrir la partie supérieure du sachet (26).

10. Dispositif selon la revendication 9, dans lequel des moyens d'étirage de bande comportent une matrice (74) située sur un premier côté de la paroi (66) de bande de film et une forme chauffée (84) située sur l'autre côté de la paroi, déplacées en même temps, la paroi de bande de film étant interposée pour former une poche (72).

11. Dispositif selon la revendication 9, dans lequel les moyens d'étirage de bande (70') comportent une matrice (74') ayant une forme reliée à une source de vide (236) sur un premier côté de la paroi (66) de la bande de film et ayant un trou (238) contenant des moyens de chauffage (240) sur l'autre côté de la paroi de bande de film destinés à se déplacer ensemble, la paroi de bande de film étant interposée pour former une poche (72).

12. Dispositif selon la revendication 9, dans lequel la machine de scellage comporte deux postes (122a, 122b) et la première machine de scellage (122) a une matrice chauffée (128) pour sceller les parois de film (66) et la seconde machine de scellage (122b), espacée de la première machine de scellage par la largeur du sachet, ayant une matrice refroidie (128) destinée à frapper les deux parois de la bande de film à nouveau pour renforcer le joint formé sur la première machine de scellage.

13. Dispositif selon la revendication 9, caractérisé en ce qu'il comporte de plus :
des moyens de maintien de rouleau de film (22) destinés à maintenir un rouleau constitué de la bande de film,
un bain pour film (32) destiné à être traversé par la bande de film (24) pour stériliser et nettoyer la bande de film, et
un tunnel (44) s'étendant depuis le bain pour film (32) vers la chambre (36) pour déplacer la bande de film (24) depuis le bain pour film jusqu'à la chambre.
